Europäisches Patentamt

European Patent Office

Office européen des brevets

(11) Veröffentlichungsnummer: **0 333 925**
**A1**

## (12) EUROPÄISCHE PATENTANMELDUNG

(21) Anmeldenummer: **88120943.1**

(22) Anmeldetag: **15.12.88**

(51) Int. Cl.⁴: **B01D 17/02 , C02F 1/40 , E03F 5/16**

(30) Priorität: **23.03.88 DE 8803923 U**

(43) Veröffentlichungstag der Anmeldung:
**27.09.89 Patentblatt 89/39**

(84) Benannte Vertragsstaaten:
**AT BE CH DE FR IT LI LU NL**

(71) Anmelder: **Passavant-Werke AG**

**D-6209 Aarbergen 7(DE)**

(72) Erfinder: **Diefenbach, Günter**
**Limburgerstrasse 23a**
**D-6255 Dornburg 1(DE)**
Erfinder: **Middelhaufe, Axel, Dipl.-Ing.**
**Panoramaweg 10**
**D-6252 Diez(DE)**
Erfinder: **Loseries, Hans Georg**
**Louise-Seher-Strasse 24a**
**D-6252 Diez(DE)**

(54) **Leichtflüssigkeitsabscheider.**

(57) BEI LEICHTFLÜSSIGKEITSABSCHEIDERN IN STEHEND ZYLINDRISCHER BAUART WIRD EIN WESENTLICH VERBESSERTER ABSCHEIDEGRAD DADURCH ERREICHT, DASS DAS ZU REINIGENDE ABWASSER DEN ABSCHEIDER (1) IN EINER ROTATIONSSTRÖMUNG DURCHLÄUFT, DIE ERST AM BEHÄLTERRAND AUFSTEIGEND UND DANN INNEN ABSTEIGEND IST. ERREICHT WIRD DIESES STRÖMUNGSBILD DURCH EINEN TANGENTIAL AUFWÄRTSGERICHTETEN ZULAUF (4) IN DER UNTEREN ABSCHEIDERHÄLFTE UND EINEN ZENTRALEN BODENAUSLAUF (5). DAS ABSCHEIDERZENTRUM KANN DER ÜBLICHE SCHWIMMERVERSCHLUSS (9) EINNEHMEN, DER BEI ERREICHEN DES SPEICHERMAXIMUMS DEN AUSLAUF VERSCHLIESST. DIESER SCHWIMMERVERSCHLUSS IST VORTEILHAFTERWEISE VON EINEM DURCHBROCHENEN FÜHRUNGSKÄFIG (10) UMGEBEN. DER FÜHRUNGSKÄFIG KANN ALS TRÄGER FÜR EIN HOHLZYLINDRISCHES KOALESZENZELEMENT (11), ZUR ZURÜCKHALTUNG FEINSTER LEICHTFLÜSSIGKEITSTRÖPFCHEN, DIENEN.

## LEICHTFLÜSSIGKEITSABSCHEIDER

DIE ERFINDUNG BETRIFFT EINEN ZUMINDEST ANGENÄHERT ZYLINDRISCHEN, STEHEND ANGEORDNETEN LEICHTFLÜSSIGKEITSABSCHEIDER ZUM ABTRENNEN VON AUF GRUND DES DICHTEUNTERSCHIEDS AUFSCHWIMMENDEN LEICHTFLÜSSIGKEITEN AUS ABWASSER.

MASSGEBEND BEI DER ABSCHEIDUNG DURCH SCHWERKRAFT IST DIE AUFENTHALTSZEIT IM ABSCHEIDER SOWIE DIE TATSACHE, DASS DIE DURCHSTRÖMUNG DES ABSCHEIDERS TURBULENZFREI ERFOLGT. BEI RECHTECKIGEN BEHÄLTERFORMEN IST DIES DADURCH ERREICHT, DASS ZU- UND ABLAUF SICH DIAMETRAL GEGENÜBERLIEGEN, BEI STEHEND ZYLINDRISCHEN ABSCHEIDERN WIRD DER LANGE DURCHSTRÖMUNGSWEG DADURCH ERREICHT, DASS DIE ZULÄUFE TANGENTIAL ZUR BERHÄLTERWAND AUSGERICHTET SIND UND SICH DER ABLAUF IN DER NÄHE DES ZULAUFS BEFINDET (DE-OS 23 43 731). DAS WASSER STRÖMT DANN ENTLANG DER BECKENWANDUNG UND KEHRT VON DORT NACH EINER WENDUNG UM 180° ZUM ABLAUF ZURÜCK. DURCH HÖHENVERLEGUNG DES ABLAUFS KANN AUCH NOCH EINE VERTIKALE STRÖMUNGSKOMPONENTE HINZUKOMMEN.

BEI EINEM ANDEREN HOHLZYLINDRISCHEN ABSCHEIDER (AT-PS 362 726) LIEGT DER ZULAUF TANGENTIAL OBEN UND DER AUSLAUF DIAMETRAL UNTEN, DAS ZENTRUM DES ABSCHEIDEBECKENS IST VON EINEM SCHRÄGGESCHLITZTEN INNENROHR EINGENOMMEN, DAS DIE ABGESCHIEDENEN LEICHTSTOFFE AUFNEHMEN UND NACH OBEN FÜHREN SOLL. DIE STRÖMUNG LÄUFT ABSTEIGEND UM DIESES INNENROHR, WOBEI SICH AUCH SCHLAMM NACH UNTEN ABSETZEN SOLL.

NACHTEILIG BEI DIESEM LETZTBESCHRIEBENEN ABSCHEIDER IST, DASS DER VON DEM INNENROHR EINGESCHLOSSENE RAUM FÜR DIE ABSCHEIDUNG PRAKTISCH NICHT ZUR VERFÜGUNG STEHT. DIE STRÖMUNGSGESCHWINDIGKEIT WIRD DAHER IN DEM VERBLEIBENDEN RINGRAUM SO HOCH SEIN, DASS DIE ABSCHEIDUNG VON FEINDISPERSEN LEICHTFLÜSSIGKEITSTRÖPFCHEN NICHT MÖGLICH IST. DIE AUFGABE, HIER EINE VERBESSERUNG ZU ERREICHEN, WIRD GEMÄSS DER ERFINDUNG DADURCH ERREICHT, DASS DER TANGENTIALE ZULAUF IN DER UNTEREN HÄLFTE DER ABSCHEIDERHÖHE LIEGT UND SCHRÄG NACH AUFWÄRTS GERICHTET IST, UND DASS UNTER FORTFALL DES INNENROHRES DER ABLAUF FÜR DAS GEREINIGTE ABWASSER IM ZENTRUM DES ABSCHEIDERBODENS ANGEORDNET IST. DIE DURCHSTRÖMUNG DES ABSCHEIDERS VOLLFÜHRT JETZT ZUNÄCHST MEHRERE UMLÄUFE AUFWÄRTS, KEHRT DANN AN DER FLÜSSIGKEITSOBERFLÄCHE UM UND LÄUFT SICH VERENGEND NACH UNTEN ZUM ZENTRALEN AUSLAUF. AUF DIESEM LANGEN WEG HABEN AUCH FEINSTE LEICHTFLÜSSIGKEITSTRÖPFCHEN ZEIT NACH OBEN AUFZUSCHWIMMEN, WOBEI INSBESONDERE BEI DEN ERSTEN UMLÄUFEN AUCH NOCH DIE ZENTRIFUGALKRAFT TRENNEND WIRKT. ERSTAUNLICHERWEISE SIND DIE ABSCHEIDEERGEBNISSE, OBGLEICH DIE STRÖMUNGSGESCHWINDIGKEIT HÖHER IST ALS IN DEN BEKANNTEN ABSCHEIDERN, GANZ WESENTLICH VERBESSERT, SO DASS IN VIELEN FÄLLEN EINE NACHREINIGUNG UNTERBLEIBEN KANN.

UM DIE ROTATIONSSTRÖMUNG IM ABSCHEIDER NICHT ZU STÖREN, KANN ES VORTEILHAFT SEIN, DIE ABLAUFLEITUNG VOLLSTÄNDIG AUSSERHALB DES ABSCHEIDERBEHÄLTERS ZU LEGEN. AUSSERDEM KANN ES ZWECKMÄSSIG SEIN, DEN ZULAUF AM AUSTRITTSENDE MUNDSTÜCKARTIG ZU VERENGEN; AUF DIESE WEISE WIRD DAS GERICHTETSEIN DER ROTATIONSSTRÖMUNG VERBESSERT.

DA AUCH DIESER ABSCHEIDER EINEN GEWISSEN SPEICHERRAUM FÜR AUFGESCHWOMMENE LEICHTFLÜSSIGKEIT HABEN MUSS, WIRD DER ÜBLICHE VERTIKAL ARBEITENDE SCHWIMMERVERSCHLUSS ANGEWENDET, DER AUF DEN DICHTEUNTERSCHIED VON LEICHTFLÜSSIGKEIT UND WASSER ABGESTIMMT IST. DIESES SCHWIMMERVERSCHLUSSVENTIL IST VORTEILHAFTERWEISE ZENTRISCH KOAXIAL ÜBER DER ABLAUFÖFFNUNG ANGEORDNET UND VON EINEM DURCHBROCHENEN FÜHRUNGSKÄFIG UMGEBEN. DIESER FÜHRUNGSKÄFIG KANN DANN AUCH NOCH ALS TRÄGER FÜR EIN HOHLZYLINDRISCHES KOALESZENZELEMENT DIENEN, DAS VOR DEM AUSLAUF FEINSTE, BEI DER DURCHSTRÖMUNG NOCH NICHT AUSREICHEND AUFGESCHWOMMENE LEICHTFLÜSSIGKEITSTRÖPFCHEN ZURÜCKHÄLT.

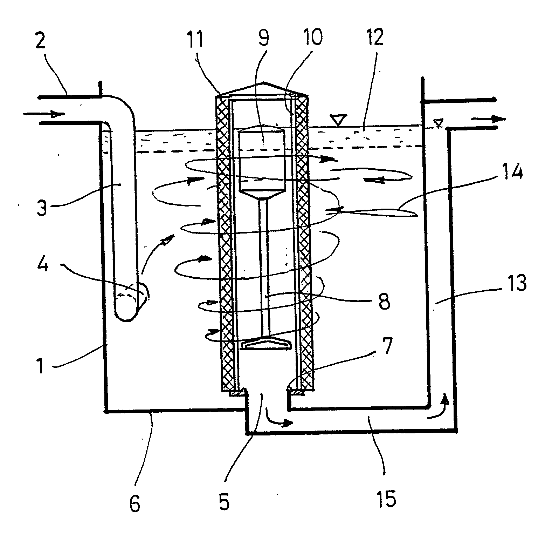

EIN AUSFÜHRUNGSBEISPIEL DER ERFINDUNG IST IN DER ZEICHNUNG IM VERTIKALEN SCHNITT SCHEMATISCH DARGESTELLT. DER STEHEND ZYLINDRISCHE BEHÄLTER 1 WEIST EINEN SEITENZULAUF 2 AUF, AN DEM SICH EINE NACH UNTEN GEFÜHRTE EINLAUFARMATUR 3 MIT TANGENTIAL AUSGERICHTETEM MUNDSTÜCK 4 ANSCHLIESST, DIE AUSLAUFÖFFNUNG 5 BEFINDET SICH IN DER MITTE DES BODENS 6 UND IST ALS SITZ 7 FÜR EIN SCHWIMMERGESTEUERTES VENTIL 8 AUSGEBILDET. DER SCHWIMMER 9 IST VON EINEM FÜHRUNGSKÄFIG 10 UMGEBEN. DIESER FÜHRUNGSKÄFIG 10 IST GLEICHZEITIG DIE HALTERUNG FÜR EIN HOHLZYLINDRISCHES KOALESZENZELEMENT 11, DAS BIS ÜBER DEN FLÜSSIGKEITSSPIEGEL 12 NACH OBEN GEFÜHRT IST. DER SPRUNGAUSLAUF 13 LIEGT AUSSERHALB DES BECKENS 1, SO DASS ER DIE ROTATIONSSTRÖMUNG 14 NICHT BEHINDERT. DER WAAGERECHTE ARM 15 DES AUSLAUFROHRES 13 KANN JEDOCH INNERHALB DES BECKENS 1 LIEGEN, WEIL ER DORT AUSSERHALB DER ROTATIONSSTRÖMUNG LIEGT.

ZUM REINIGEN DES KOALESZENZELEMENTES 11 KANN DER GANZE SCHWIMMERKÄFIG HERAUSGEHOBEN WERDEN. DAS MATTENFÖRMIGE KOALESZENZELEMENT IST VORZUGSWEISE MIT BÄNDERN GEHALTEN UND KANN ZUM REINIGEN AUSGEBREITET WERDEN. ALS MATERIAL FÜR DAS KOALESZENZELEMENT HAT SICH VERTIKULIERTER POLYURETHANSCHAUMSTOFF BEWÄHRT.

### Ansprüche

1. ZUMINDEST ANGENÄHERT ZYLINDRISCHER, STEHEND ANGEORDNETER LEICHTFLÜSSIGKEITSABSCHEIDER, MIT TANGENTIAL AUSGERICHTETEM ZULAUF, **DADURCH GEKENNZEICHNET**, DASS DER ZULAUF (2, 3) IN DER UNTEREN HÄLFTE DER ABSCHEIDERHÖHE LIEGT UND SCHRÄG NACH AUFWÄRTS GERICHTET IST, UND DASS DER ABLAUF (5) FÜR DAS GEREINIGTE ABWASSER IM ZENTRUM DES ABSCHEIDERBODENS (6) ANGEORDNET IST.

2. LEICHTFLÜSSIGKEITSABSCHEIDER NACH ANSPRUCH 1, **DADURCH GEKENNZEICHNET**, DASS DIE ABLAUFLEITUNG (13, 15) VOLLSTÄNDIG AUSSERHALB DES ABSCHEIDEBEHÄLTERS (1) VERLÄUFT.

3. LEICHTFLÜSSIGKEITSABSCHEIDER NACH ANSPRUCH 1 ODER 2, **DADURCH GEKENNZEICHNET**, DASS DER ZULAUF (2) AM AUSTRITTSENDE (4) MUNDSTÜCKARTIG VERENGT IST.

4. LEICHTFLÜSSIGKEITSABSCHEIDER NACH ANSPRUCH 1, 2 ODER 3, **DADURCH GEKENNZEICHNET**, DASS DIE ABLAUFÖFFNUNG (5) MIT EINEM VERTIKAL ARBEITENDEN SCHWIMMERVERSCHLUSSVENTIL (8. 9) VERSEHEN IST, DAS AUF DEN DICHTEUNTERSCHIED VON LEICHTFLÜSSIGKEIT UND WASSER ABGESTIMMT IST.

5. LEICHTFLÜSSIGKEITSABSCHEIDER NACH ANSPRUCH 4, **DADURCH GEKENNZEICHNET**, DASS DAS SCHWIMMERVERSCHLUSSVENTIL (8, 9) ZENTRISCH KOAXIAL ÜBER DER ABLAUFÖFFNUNG (5) ANGEORDNET IST.

6. LEICHTFLÜSSIGKEITSABSCHEIDER NACH ANSPRUCH 5, **DADURCH GEKENNZEICHNET**, DASS DER SCHWIMMER (9) DES VERSCHLUSSVENTILS (8, 9) VON EINEM DURCHBROCHENEN FÜHRUNGSKÄFIG (10) UMGEBEN IST.

7. LEICHTFLÜSSIGKEITSABSCHEIDER NACH ANSPRUCH 6, **DADURCH GEKENNZEICHNET**, DASS DER FÜHRUNGSKÄFIG (10) DIE HALTERUNG FÜR EIN HOHLZYLINDRISCHES, DEN FÜHRUNGSKÄFIG GESCHLOSSEN UMGEBENDES KOALESZENZELEMENT (11) IST.

8. LEICHTFLÜSSIGKEITSABSCHEIDER NACH ANSPRUCH 7, **DADURCH GEKENNZEICHNET**, DASS DAS KOALESZENZELEMENT (11) AUS EINER OFFENPORIGEN KUNSTSTOFFMATTE BESTEHT.

Europäisches
Patentamt

# EUROPÄISCHER RECHERCHENBERICHT

Nummer der Anmeldung

EP 88 12 0943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X L | DE-A-3 704 911 (PASSAVANT) * Insgesamt * (Das Dokument wird mit "L" bezeichnet weil es Zweifel and der Ersthinterlegungseigenschaft des DE-U-8 803 923 und damit an der Rechtsbeständigkeit der beamspruchten Unionspriorität begründet) --- | 1-8 | B 01 D 17/02 C 02 F 1/40 E 03 F 5/16 |
| P,X | DE-U-8 803 923 (PASSAVANT) * Insgesamt * --- | 1-8 | |
| X | EP-A-0 046 277 (PASSAVANT) * Seite 3, Zeilen 13-28; Seite 5, Zeilen 19-33; Ansprüche 1,2,5; Figur 1 * | 1,3-6 | |
| Y | --- | 2,7 | |
| Y | EP-A-0 225 506 (PASSAVANT) * Figur 1; Seite 4, Zeile 24 - Seite 5, Zeile 5; Ansprüche 11,12 * ----- | 2,7 | |
| | | | **RECHERCHIERTE SACHGEBIETE (Int. Cl.4)** B 01 D |

Der vorliegende Recherchenbericht wurde für alle Patentansprüche erstellt

| Recherchenort | Abschlußdatum der Recherche | Prüfer |
|---|---|---|
| DEN HAAG | 29-05-1989 | KASPERS H.M.C. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
   Dokument